# EUROPÄISCHE PATENTSCHRIFT

(11) **EP 3 710 730 B1**
(45) Veröffentlichungstag und Bekanntmachung des Hinweises auf die Patenterteilung: **21.05.2025**
(21) Anmeldenummer: 18795320.3
(22) Anmeldetag: 16.10.2018
(51) Int. Cl.: F16H 57/01, F16H 61/12, B62M 6/40

(54) **VERFAHREN ZUR ÜBERWACHUNG EINES GETRIEBES EINES ELEKTROFAHRRADS, STEUERGERÄT, GETRIEBEANALYSEVERFAHREN UND SERVEREINRICHTUNG**
METHOD FOR MONITORING A TRANSMISSION OF A ELECTRIC BYCICLE, CONTROL UNIT, TRANSMISSION ANALYSIS METHOD AND SERVER DEVICE
PROCÉDÉ PERMETTANT DE SURVEILLER UNE TRANSMISSION D'UN VÉLO ÉLECTRIQUE, APPAREIL DE COMMANDE, PROCÉDÉ D'ANALYSE DE LA TRANSMISSION ET DISPOSITIF SERVEUR

(30) Priorität: 14.11.2017 DE 102017220245
(43) Veröffentlichungstag der Anmeldung: 23.09.2020
(73) Patentinhaber: Robert Bosch GmbH, 70442 Stuttgart (DE)
(72) Erfinder: DUKART, Anton, 70839 Gerlingen (DE); KIMMICH, Peter, 71144 Steinenbronn (DE); HINTERKAUSEN, Markus, 71696 Moeglingen (DE)
(86) Internationale Anmeldenummer: PCT/EP2018/078270
(87) Internationale Veröffentlichungsnummer: WO 2019/096520

(56) Entgegenhaltungen:
- DE-A1- 102005 048 533
- DE-A1- 102005 048 533
- US-A1- 2016 035 150
- US-A1- 2016 321 845
- US-A1- 2016 321 845

## Beschreibung

### Stand der Technik

Die vorliegende Erfindung betrifft ein Verfahren zur Überwachung eines Getriebes einer Antriebseinheit eines Elektrofahrrads, und ein Steuergerät für das Fahrzeug zur Durchführung des Verfahrens. Die Erfindung betrifft auch ein Getriebeanalyseverfahren und eine Servereinrichtung zur Durchführung des Getriebeanalyseverfahrens.

Das Senden von Daten mittels eines Steuergeräts eines Fahrzeugs an eine Servereinrichtung ist bekannt, beispielsweise werden mittels eines Fahrradcomputers zu einer gefahrenen Strecke ein Koordinatenverlauf und ein Herzfrequenzverlauf eines Radfahrers an eine Servereinrichtung gesendet. Des Weiteren können Streckenkoordinaten einer Strecke von der Servereinrichtung an das Steuergerät des Fahrzeugs gesendet und von diesem empfangen werden. In der DE 10 2005 048 533 A1 ist ein Verfahren zum Überwachen eines Getriebes eines Fahrzeugs beschrieben. In der US 2016/321845 A1 ist ein Verfahren zur Fehlerdiagnose eine elektrischen Zweirads beschrieben.

### Offenbarung der Erfindung

Die vorliegende Erfindung betrifft ein Verfahren zur Überwachung eines Getriebes einer Antriebseinheit eines Elektrofahrrads gemäß Anspruch 1, sowie ein entsprechendes Steuergerät nach Anspruch 4 sowie ein entsprechendes Getriebeanalyseverfahrens gemäß Anspruch 6 sowie eine entsprechende Servereinrichtung gemäß Anspruch 9. Vorteilhafte Ausgestaltungen sind durch die abhängigen Ansprüche definiert.

Weitere Vorteile ergeben sich aus der nachfolgenden Beschreibung von Ausführungsbeispielen mit Bezug zu den Figuren.
Figur 1: Elektrofahrrad mit Sensoren und Steuergerät sowie Fahrer
Figur 2: Verbindungen zwischen Elektrofahrrad, Smartphone und Servereinrichtung
Figur 3: Anzeigevorrichtung
Figur 4: Verfahren zur Überwachung eines Getriebes eines Fahrzeugs
Figur 5: Steuergerät zur Überwachung eines Getriebes eines Fahrzeugs
Figur 6: Ablaufdiagramm eines Getriebeanalyseverfahrens für eine Servereinrichtung
Figur 7: Drehzahldiagramm bei einem Getriebe mit Einzelzahndefekt
Figur 8: Drehzahldiagramm bei einem Getriebe mit mehreren defekten Zähnen Ausführungsbeispiele

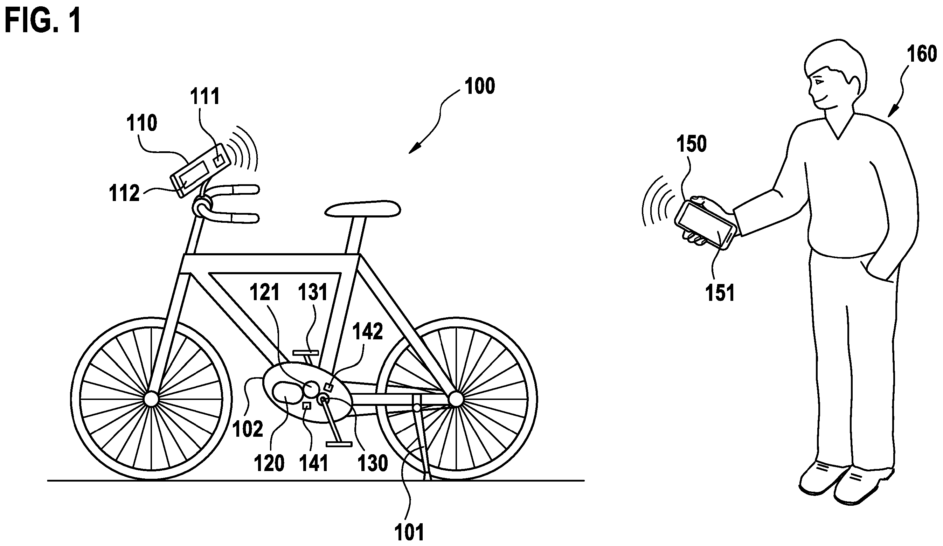

In Figur 1 ist ein mittels eines Fahrradständers 101 abgestelltes Elektrofahrrad 100 als Fahrzeug 100 sowie ein daneben stehender Fahrer 160 des Elektrofahrrads 100 mit einem Smartphone 150 als mobiles Elektronikgerät 150 dargestellt. Das Elektrofahrrad 100 weist eine Antriebseinheit 102 auf. Die Antriebseinheit 102 umfasst eine Kurbelwelle 130, welche mit zwei Pedalen 131 zur Kraftübertragung einer Trittkraft des Fahrers 160 auf die Kurbelwelle 130 beziehungsweise ein Hinterrad des Elektrofahrzeugs 100 verbunden ist. Des Weiteren weist die Antriebseinheit 102 einen Elektromotor 120 als Antriebsmotor auf. Der Elektromotor 120 dient im Betrieb des Elektrofahrrads 100 zur Kraftunterstützung der Trittkraft des Fahrers 160. Der Elektromotor 100 wird mittels eines Steuergerätes 110, welches am Elektrofahrrad 100 angeordnet ist, angesteuert. Die Ansteuerung erfolgt beispielsweise in Abhängigkeit eines mittels eines Drehmomentsensors erfassten Fahrerdrehmoments. Das Fahrerdrehmoment wird beispielsweise an einer Welle der Antriebseinheit 102 erfasst und resultiert aus der Trittkraft des Fahrers 160 auf die Pedale 131. Des Weiteren können ein Drehzahlsensor 141, welcher eine Drehzahl einer Welle der Antriebseinheit 102 erfasst, und/oder ein Vibrationssensor 510, welcher eine Vibration der Antriebseinheit 102 beziehungsweise des Elektrofahrrads 100 erfasst, in der Antriebseinheit 102 vorgesehen sein. Beispielsweise erfasst der Drehzahlsensor 141 die Drehzahl der Rotorwelle des Elektromotors 120 oder die Drehzahl der Kurbelwelle 130 oder eine Drehzahl eines Zahnrads eines Getriebes 121 in der Antriebseinheit 102, wobei das Getriebe 121 beispielsweise zwischen der Kurbelwelle 130 und dem Elektromotor 120 angeordnet ist. Das Motordrehmoment und das Fahrerdrehmoment werden in diesem Beispiel mittels des Getriebes 121 summiert und mittels einer Kette oder eines Zahnriemens auf das Hinterrad des Elektrofahrrads 100 übertragen. Das Steuergerät 110 weist eine Anzeigevorrichtung 112 und eine Sende- und Empfangseinheit 111 auf. Die Sende- und Empfangseinheit 111 ist dazu eingerichtet, mittels einer Mobilfunkverbindung und/oder einer WLAN-Verbindung mit einer Servereinrichtung 200 und/oder mit dem Smartphone 150, insbesondere mittels einer Bluetooth-Verbindung zu kommunizieren bzw. Daten auszutauschen. Das Smartphone 150 weist eine Anzeigevorrichtung 151 auf.

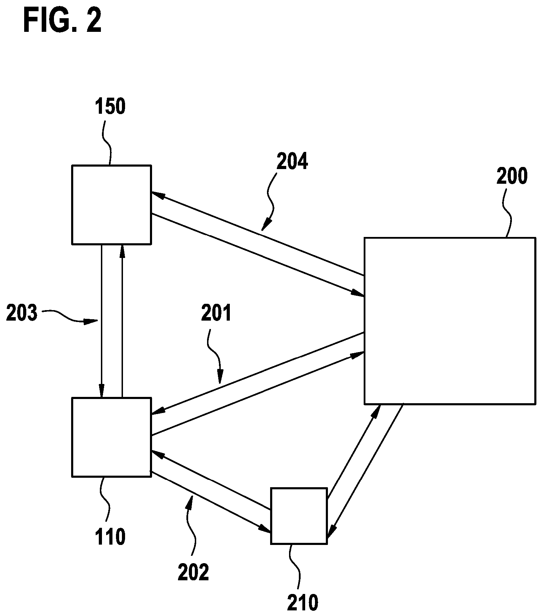

In Figur 2 sind das Steuergerät 110 des Elektrofahrrads 100, ein Smartphone 150 und eine Servereinrichtung 200 als Blockschaltbild dargestellt. Es kann vorgesehen sein, dass das Steuergerät 110 mittels einer Mobilfunkverbindung 201 mit der Servereinrichtung 200 verbunden ist, das heißt Daten austauscht. Alternativ oder zusätzlich kann es vorgesehen sein, dass das Steuergerät 110 dazu eingerichtet ist, mittels einer WLAN-Verbindung 202 mit einem Router 210 und der Servereinrichtung 200 verbunden zu sein beziehungsweise Daten auszutauschen. Alternativ oder zusätzlich kann es vorgesehen sein, dass das Steuergerät 110 dazu eingerichtet ist, beispielsweise mittels einer Bluetooth-Verbindung 203 mit dem Smartphone 150 Daten auszutauschen. Das Smartphone 150 ist dazu eingerichtet, mit der Servereinrichtung 200 mittels einer Mobilfunkverbindung 204 oder einer WLAN-Verbindung 204 Daten auszutauschen.

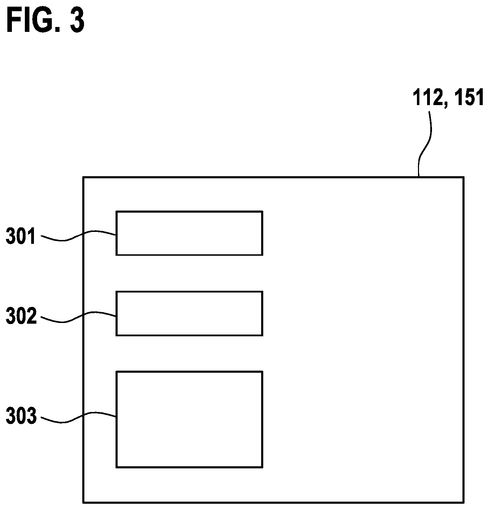

In Figur 3 ist die Anzeigevorrichtung 112 des Steuergeräts 110 beziehungsweise die Anzeigevorrichtung 151 des Smartphones 150 dargestellt. Mittels der Anzeigevorrichtung 112 und/oder 151 wird dem Fahrer 160 des Elektrofahrrads 100 in einem Bereich 301 eine Getriebezustandsbewertung, welche einen Zustand des Getriebes 121 der Antriebseinheit 102 repräsentiert, angezeigt. Die Anzeige der Getriebezustandsbewertung erfolgt beispielsweise als Zahl oder grafisch beziehungsweise farblich. Beispielsweise wird dem Fahrer 160 mit einem roten Getriebe-Symbol angezeigt, dass das Getriebe 121 in einem abgenutzten Zustand ist. Des Weiteren kann es vorgesehen sein, dass dem Fahrer 160 zusätzlich in einem Bereich 302 eine prognostizierte Restlebensdauer des Getriebes 121 angezeigt wird, beispielsweise wird dem Fahrer eine Restlebensdauer in einem Bereich kleiner 1000 km beziehungsweise 500 Betriebsstunden angezeigt. Vorzugsweise werden dem Fahrer 160 in einem Bereich 303 des Weiteren Servicedaten angezeigt, beispielsweise werden dem Fahrer 160 ein Name und eine Adresse eines zum aktuellen Standort nahe gelegenen Fahrrad-Händlers mit einer Reparaturwerkstatt zur Reparatur des Getriebes 121 angezeigt.

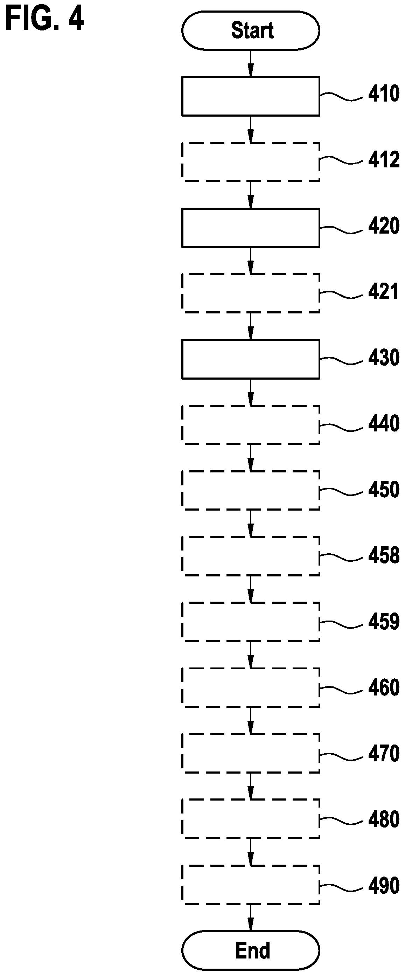

In Figur 4 ist ein Ablauf des Verfahrens zur Überwachung der Antriebseinheit 102 des Elektrofahrrads 100 als Blockschaltbild dargestellt. Das Verfahren wird von dem Steuergerät 110 oder dem mobilen Elektronikgerät 150 beziehungsweise dem Smartphone 150 durchgeführt. In einem ersten Schritt 410 wird mindestens eine Betriebsgröße einer Welle der Antriebseinheit 102 zu wenigstens zwei Zeitpunkten erfasst. Beispielsweise wird die Drehzahl des Getriebes 121 der Antriebseinheit 102 mittels eines Drehzahlsensors 141 und/oder die Drehzahl eines Rotors des Elektromotors 120 der Antriebseinheit 102 mittels einer Motorsensorik 141 zur Rotorlagebestimmung erfasst. Die Erfassung 410 der Betriebsgröße der Welle der Antriebseinheit 102 erfolgt zu mindestens zwei Zeitpunkten mittels des Steuergeräts oder dem Smartphone 150. Erfindungsgemäß ist es vorgesehen, in einem Schritt 412 wenigstens eine Fahrdynamikgröße des Fahrzeugs zu mindestens zwei Zeitpunkten zu erfassen. Die Fahrdynamikgröße ist beispielsweise eine Beschleunigung des Fahrzeugs und/oder eine Geschwindigkeit des Fahrzeugs. Anschließend wird in einem weiteren Schritt 420 der erfasste Betriebsgrößenverlauf an die Servereinrichtung 200 gesendet. Erfindungsgemäß wird in einem weiteren Schritt 421 ein Fahrdynamikgrößenverlauf an die Servereinrichtung 200 gesendet. Danach wird die Getriebezustandsbewertung in Abhängigkeit des gesendeten Betriebsgrößenverlaufs von der Servereinrichtung 200 empfangen. Erfindungsgemäß ist es vorgehesen, dass die Getriebezustandsbewertung zusätzlich in Abhängigkeit des gesendeten Fahrdynamikgrößenverlaufes von der Servereinrichtung 200 empfangen wird.

Die Getriebezustandsbewertung ist beispielsweise eine Zahl, welche den Zustand des Getriebes 121 des Elektrofahrrads 100 repräsentiert. Beispielsweise ist die Getriebezustandsbewertung eine Zahl zwischen 1 und 100, wobei 100 ein neues Getriebe repräsentiert. Die Getriebezustandsbewertung wird dem Fahrer 160 optional im Schritt 470 angezeigt, wobei die Anzeige 470 vorteilhafterweise grafisch erfolgen kann.

Es kann vorgesehen sein, dass in einem Schritt 440 zusätzlich eine prognostizierte Restlebensdauer des Getriebes 121 in Abhängigkeit der empfangenen Getriebezustandsbewertung ermittelt wird. Beispielsweise erfolgt die Ermittlung 440 durch Zuordnung, das heißt jeder Getriebezustandsbewertung ist eine Restlebensdauer zugeordnet. Alternativ kann in einem Schritt 450 die prognostizierte Restlebensdauer von der Servereinrichtung 200 empfangen werden. Die prognostizierte Restlebensdauer wird dem Fahrer im optionalen Schritt 480 angezeigt.

In einem weiteren optionalen Schritt 458 kann eine Erfassung von Ortskoordinaten des Fahrzeugs 100 und in einem optionalen Schritt 459 ein Senden der Ortskoordinaten an die Servereinrichtung 200 vorgesehen sein. Des Weiteren können in dem optionalen Schritt 460 Servicedaten von der Servereinrichtung 200 in Abhängigkeit der gesendeten Ortskoordinaten und des gesendeten Betriebsgrößenverlaufs und/oder des gesendeten Fahrdynamikgrößenverlaufes von der Servereinrichtung 200 empfangen werden. Die Servicedaten werden dem Fahrer im optionalen Schritt 490 angezeigt.

Darüber hinaus kann in einem optionalen Schritt 431 ein Empfangen von Steuerparametern in Abhängigkeit des gesendeten Betriebsgrößenverlaufs von der Servereinrichtung 200 vorgesehen sein. Die Steuerparameter sind dazu eingerichtet, ein erzeugtes Drehmoment und/oder eine erzeugte Drehzahl des Antriebsmotors 120 beziehungsweise des Elektromotors 120 zumindest zeitweise zu begrenzen.

Anschließend erfolgt eine optionale Ansteuerung 499 des Elektromotors 120 in Abhängigkeit der empfangenen Steuerparameter (nicht in Figur 4 dargestellt).

Alternativ oder zusätzlich kann eine automatische Gangschaltung in Abhängigkeit der empfangenen Steuerparameter gesteuert werden (nicht in Figur 4 dargestellt).

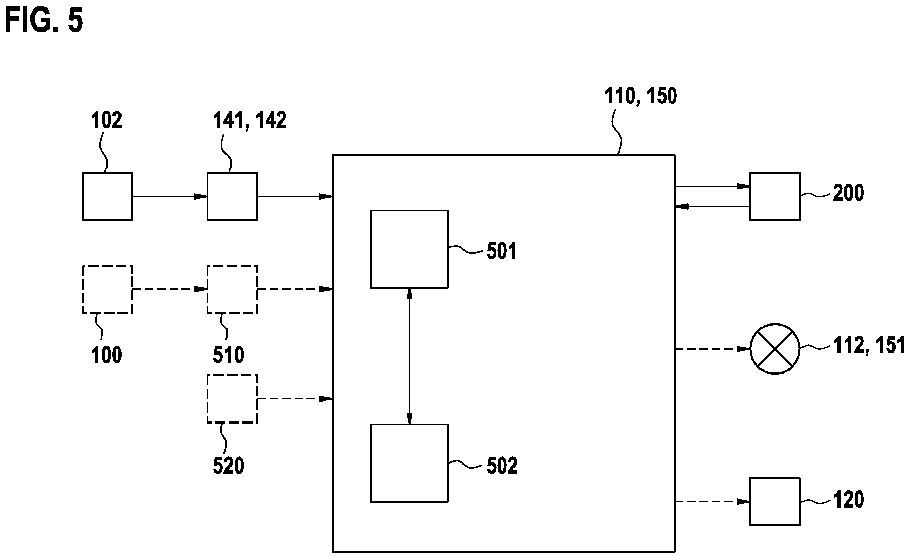

In Figur 5 ist das Steuergerät 110 oder ein mobiles Elektronikgerät 150, insbesondere ein Smartphone, zur Überwachung des Getriebes 121 der Antriebseinheit 102 schematisch als Blockschaltbild dargestellt. Das Steuergerät 110 oder das Smartphone 150 weist eine Recheneinheit 501 auf und erfasst mindestens eine Betriebsgröße einer Welle der Antriebseinheit 102 zu mindestens zwei Zeitpunkten. Die erfasste Betriebsgröße wird mittels eines Sensors 141 und/oder 142 erfasst, wobei die Betriebsgröße beispielsweise eine Drehzahl, ein Drehmoment, ein Drehwinkel der Welle und/oder eine Vibrationsgröße der Antriebseinheit 102 ist. Erfindungsgemäß ist es vorgesehen, dass das Steuergerät 110, 150 mindestens eine Fahrdynamikgröße des Elektrofahrrads 100 zu mindestens zwei Zeitpunkten erfasst. Die Fahrdynamikgröße ist beispielsweise eine Beschleunigung und/oder eine Geschwindigkeit des Elektrofahrrads 100 in Richtung der Längsachse des Elektrofahrrads 100, wobei die Fahrdynamikgröße bevorzugt mittels eines Sensors 510 erfasst wird. Der Sensor 510 ist am Elektrofahrrad 100 angeordnet und ist beispielsweise ein Geschwindigkeitssensor, insbesondere ein Reed-Sensor, und/oder ein Beschleunigungssensor 510, insbesondere ein MEMS-Beschleunigungssensor, welcher in dem Steuergerät 110, 150 angeordnet ist. Des Weiteren kann das Steuergerät 110, 150 optional Ortskoordinaten mittels eines Ortssensors erfassen. Das Steuergerät 110 oder das Smartphone 150 speichern die erfasste Betriebsgröße und die Fahrdynamikgröße und/oder die Ortskoordinaten beispielsweise in einem Speicher 502 des Steuergeräts 110 oder des Smartphones 150. In dem Speicher 502 kann beispielsweise der Betriebsgrößenverlauf der erfassten Betriebsgröße der letzten 5 Minuten abgespeichert sein, wobei die Betriebsgröße pro Sekunde einmal erfasst wird. Anschließend wird der Betriebsgrößenverlauf an eine Servereinrichtung 200 gesendet. Die Servereinrichtung 200 ermittelt durch ein Getriebeanalyseverfahren die Getriebezustandsbewertung. Optional ermittelt die Servereinrichtung 200 beispielsweise die prognostizierte Restlebensdauer und/oder die Servicedaten. Das Steuergerät 110 beziehungsweise das Smartphone 150 empfangen die Getriebezustandsbewertung und optional die prognostizierte Restlebensdauer und/oder die Servicedaten. Das Steuergerät 110, 150 erzeugt anschließend optional ein Anzeigesignal, welches dazu eingerichtet ist, die Getriebezustandsbewertung, die prognostizierte Restlebensdauer und/oder die Servicedaten dem Fahrer 160 mittels einer Anzeigevorrichtung 112 des Steuergeräts 110 oder mittels einer Anzeigevorrichtung 151 des Smartphones 150 anzuzeigen.

Erfindungsgemäß ist es vorgesehen, dass das Steuergerät 110, 150 die Steuerparameter in Abhängigkeit des gesendeten Betriebsgrößenverlaufs empfängt oder die Steuerparameter in Abhängigkeit der empfangenen

Getriebezustandsbewertung ermittelt. Das Steuergerät 110, 150 kann dann den Antriebsmotor 120 in Abhängigkeit der Steuerparameter ansteuern. Beispielsweise begrenzen die Steuerparameter das maximale Drehmoment des Elektromotors 120 zur Reduktion des Verschleißes des Getriebes 121.

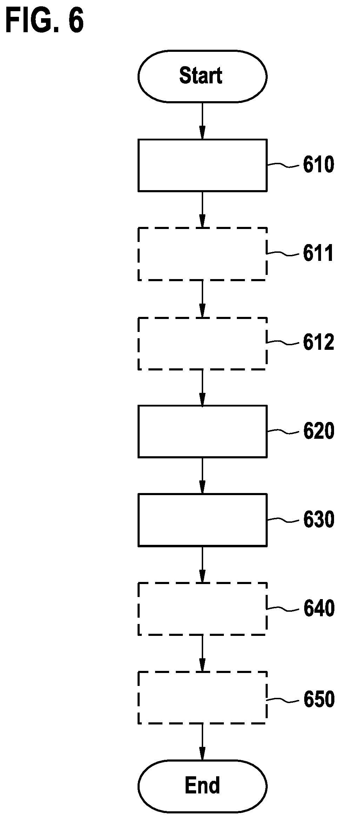

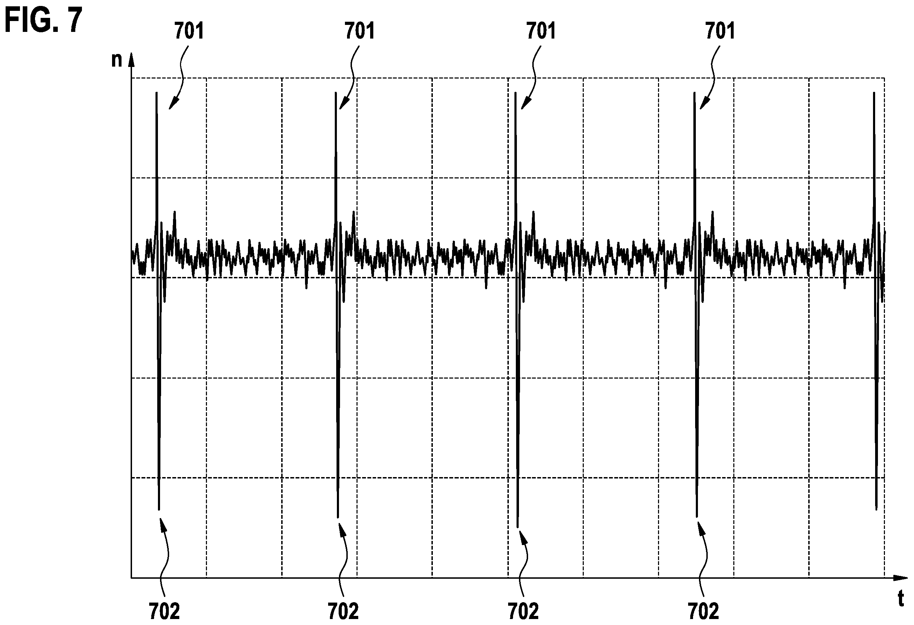

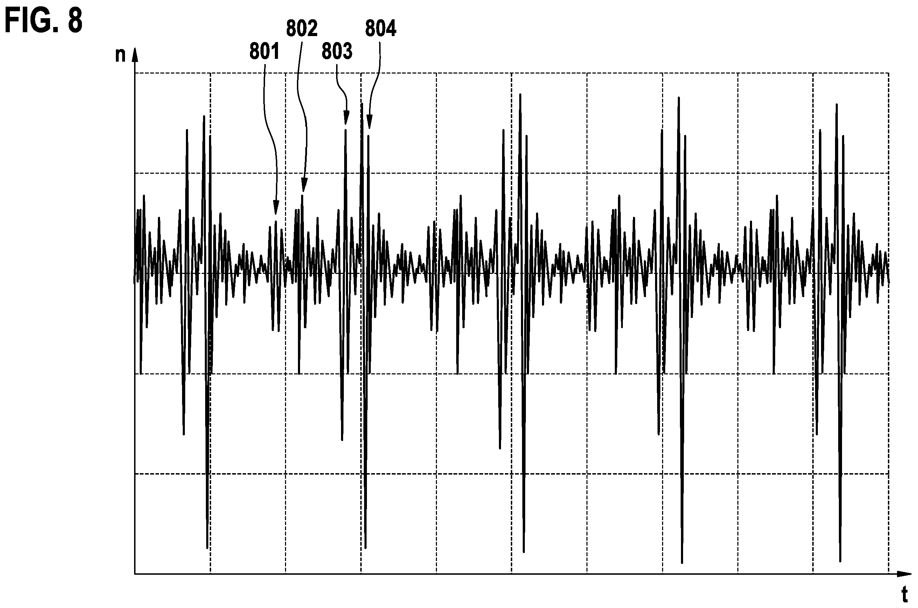

In Figur 6 ist ein Ausführungsbeispiel für den Ablauf eines erfindungsgemäßen Getriebeanalyseverfahrens als Blockdiagramm dargestellt. Das Getriebeanalyseverfahren wird mittels der Servereinrichtung 200 durchgeführt. In einem ersten Schritt 610 des Getriebeanalyseverfahrens wird mindestens ein Betriebsgrößenverlauf einer Welle der Antriebseinheit 102 des Elektrofahrrads 100 empfangen. Zusätzlich kann der Empfang 611 eines Fahrdynamikgrößenverlaufes des Fahrzeugs 100 vorgesehen sein. Anschließend erfolgt eine Ermittlung 620 der Getriebezustandsbewertung in Abhängigkeit des mindestens einen empfangenen Betriebsgrößenverlaufs. Erfindunsgemäß ist eine Ermittlung 620 der Getriebezustandsbewertung in Abhängigkeit von mehreren Betriebsgrößenverläufen und eine Ermittlung 620 der Getriebezustandsbewertung zusätzlich in Abhängigkeit von mindestens einem Fahrdynamikgrößenverlauf vorgesehen sein. Beispielsweise wird die Getriebezustandsbewertung in Abhängigkeit eines Drehzahlverlaufs einer Rotorwelle des Elektromotors 120 und in Abhängigkeit der Geschwindigkeit des Fahrzeugs 100 ermittelt, siehe dazu auch die Figuren 7 und 8. Die Ermittlung 620 der Getriebezustandsbewertung kann bevorzugt mittels eines neuronalen Netzwerkes durch eine rechnerbasierte Erkennung in Abhängigkeit des mindestens einen Betriebsgrößenverlaufs erfolgen, wobei der Erkennung einer Getriebezustandsbewertung eine Wahrscheinlichkeit zugeordnet wird. Das neuronale Netzwerk wird zu diesem Zweck mit einer Vielzahl von Getriebezustandsbewertungen zugeordneten Betriebsgrößenverläufen trainiert, wodurch die Gewichte im neuronalen Netzwerk angepasst werden. Danach wird in einem weiteren Schritt 630 die ermittelte Getriebezustandsbewertung an das Steuergerät 110 des Fahrzeugs 100 und/oder an das mobile Elektronikgerät 150, insbesondere das Smartphone, gesendet.

In dem Getriebeanalyseverfahren können optional ein Empfang 612 von Ortskoordinaten des Fahrzeugs 100 und eine Ermittlung 640 von Servicedaten in Abhängigkeit des empfangenen Betriebsgrößenverlaufes und des empfangenen Fahrdynamikgrößenverlaufes und/oder der empfangenen Ortskoordinaten des Fahrzeugs 100 vorgesehen sein. Die ermittelten Servicedaten werden in dem optionalen Schritt 650 an das Steuergerät 110 des Elektrofahrrads 100 beziehungsweise an das mobile Elektronikgerät 150 gesendet.

Ferner kann die Ermittlung 660 einer prognostizierten Restlebensdauer des Getriebes 121 in Abhängigkeit des empfangenen Betriebsgrößenverlaufes und/oder des empfangenen Fahrdynamikgrößenverlaufes sowie ein Senden 670 der ermittelten Restlebensdauer des Getriebes 121 an das Steuergerät 110, 150 vorgesehen sein.

In Figur 7 ist ein Diagramm des Verlaufs einer Motordrehzahl n in Abhängigkeit der Zeit t dargestellt. Der Motordrehzahlverlauf weist eine in periodischen Abständen erhöhte Drehzahl 701 bzw. eine erniedrigte Drehzahl 702 bzw. nach Ablauf von festen Zeitspannen regelmäßig starke Abweichungen vom Mittelwert der Motordrehzahl n auf. Die erhöhte Drehzahl 701 repräsentiert eine Schädigung eines bestimmten Zahns bzw. einen Einzelzahndefekt des Getriebes 121 bzw. einer ersten Übersetzungsstufe und/oder einer zweiten Übersetzungsstufe des Getriebes 121. Beispielsweise ist die Frequenz der erhöhten Drehzahl 701 ein Vielfaches der Getriebeübersetzung. Zeitgleich zur erhöhten Drehzahl 701 bzw. zur erniedrigen Drehzahl 702 weist das Motordrehmoments M Schwankungen auf, wodurch der beschädigte Zahn weiter verstärkt belastet wird. Es liegt folglich ein zunehmender Getriebeverschleiß der ersten Übersetzungsstufe und/oder der zweiten Übersetzungsstufe des Getriebes 121 vor. Falls der beschädigte Zahn bricht, kann dies zu einem Getriebeschaden führen. Die Ermittlung 620 eines Einzelzahndefektes kann folglich mittels der Servereinrichtung 200 beispielsweise in Abhängigkeit einer Überschreitung eines Schwellenwertes der ermittelten Motordrehzahl n erfolgen. Die Servereinrichtung 200 ermittelt beispielsweise den Schwellenwert zur Ermittlung 620 der Getriebezustandsbewertung eines in 100 km bevorstehenden Getriebeschadens in Abhängigkeit einer Vielzahl von Getriebezustandsbewertungen zugeordneten Betriebsgrößenverläufen einer Vielzahl an Elektrofahrrädern 100.

In Figur 8 ist ein weiteres Diagramm eines anderen Verlaufs einer Motordrehzahl n in Abhängigkeit der Zeit t dargestellt, wobei mehrere Einzelzahndefekte 801, 802, 803 und 804 vorliegen. Die Getriebezustandsbewertung lässt sich alternativ oder zusätzlich in Abhängigkeit eines Vergleich zwischen Motordrehzahlverläufen durch ein rechnerbasiertes Erkennen mittels eines neuronalen Netzwerkes ermitteln, vergleiche beispielsweise Figur 7 und Figur 8. Die Ermittlung 620 kann ferner in Abhängigkeit einer Varianz beziehungsweise einer Schwankung der Drehzahl der Rotorwelle des Elektromotors 120 bei konstanter Geschwindigkeit erfolgen.

## Patentansprüche

1. Verfahren zur Überwachung eines Getriebes (121) einer Antriebseinheit (102) mit einem Antriebsmotor (120) eines Elektrofahrrads (100) aufweisend folgende Verfahrensschritte
• Erfassung (410) wenigstens einer Betriebsgröße einer Welle in der Antriebseinheit (102) zu mindestens zwei Zeitpunkten mittels mindestens eines Sensors (141, 142), wobei die erfasste Betriebsgröße eine Drehzahl, ein Drehmoment, ein Drehwinkel der Welle und/oder eine Vibrationsgröße der Antriebseinheit (102) ist, und
Erfassung (412) wenigstens einer Fahrdynamikgröße des Elektrofahrrads (100) zu mindestens zwei Zeitpunkten, wobei die Fahrdynamikgröße eine Beschleunigung und/oder eine Geschwindigkeit des Elektrofahrrads (100) in Längsrichtung des Elektrofahrrads (100) ist;
• Senden (420) des erfassten Betriebsgrößenverlaufs an eine Servereinrichtung (200), und Senden (421) des mindestens einen Fahrdynamikgrößenverlaufes an die Servereinrichtung (200), und
• Empfangen (430) einer Getriebezustandsbewertung in Abhängigkeit des gesendeten Betriebsgrößenverlaufs und des gesendeten Fahrdynamikgrößenverlaufes von der Servereinrichtung (200), wobei die Getriebezustandsbewertung den aktuellen Zustand des Getriebes (121) des Elektrofahrrads (100) repräsentiert.

2. Verfahren nach Anspruch 1, **dadurch gekennzeichnet, dass** zusätzlich die folgenden Schritte durchgeführt werden
• Erfassung (458) von Ortskoordinaten des Elektrofahrrads (100),
• Senden (459) der Ortskoordinaten an die Servereinrichtung (200), und
• Empfangen (460) von Servicedaten in Abhängigkeit der gesendeten Ortskoordinaten und des gesendeten Betriebsgrößenverlaufs und/oder des gesendeten Fahrdynamikgrößenverlaufes von der Servereinrichtung (200).

3. Verfahren nach einem der vorhergehenden Ansprüche, **dadurch gekennzeichnet, dass** die folgenden Schritte durchgeführt werden
• Empfangen (431) von Steuerparametern in Abhängigkeit des gesendeten Betriebsgrößenverlaufs zur Ansteuerung des Antriebsmotors (120) von der Servereinrichtung (200), wobei die Steuerparameter dazu eingerichtet sind, ein erzeugtes Drehmoment und/oder eine erzeugte Drehzahl des Antriebsmotors (120) zumindest zeitweise zu begrenzen, und
• Ansteuerung (499) des Antriebsmotors (120) in Abhängigkeit der empfangenen Steuerparameter.

4. Steuergerät (110, 150), eingerichtet zur Durchführung eines Verfahrens nach einem der Ansprüche 1 bis 3.

5. Elektrofahrrad (100) mit einem Steuergerät (110) nach Anspruch 4 zur Überwachung eines Getriebes (121) einer Antriebseinheit (102) mit einem Antriebsmotor (120) des Fahrzeugs (100).

6. Getriebeanalyseverfahren für eine Servereinrichtung (200), aufweisend folgende Schritte
• Empfangen (610) von mindestens einem Betriebsgrößenverlauf einer Welle in einer Antriebseinheit (102) mit einem Getriebe (121) und einem Antriebsmotor (120) eines Elektrofahrrads (100), wobei die Betriebsgröße eine Drehzahl, ein Drehmoment, ein Drehwinkel der Welle und/oder eine Vibrationsgröße der Antriebseinheit (102) ist,
• Ermittlung (620) einer Getriebezustandsbewertung in Abhängigkeit des empfangenen Betriebsgrößenverlaufs und einer Vielzahl an Betriebsgrößenverläufen einer Vielzahl an anderen Elektrofahrrädern(100) mit dem gleichen Getriebe (121), wobei die Getriebezustandsbewertung den aktuellen Zustand des Getriebes (121) des Elektrofahrrads (100) repräsentiert, wobei eine Ermittlung (620) der Getriebezustandsbewertung durch eine rechnerbasierte Erkennung mittels eines neuronalen Netzwerkes erfolgt, wobei das neuronale Netzwerk auf der Servereinrichtung (200) mit der Vielzahl an Getriebezustandsbewertungen zugeordneten Betriebsgrößenverläufen einer Vielzahl an Fahrzeugen (100) mit dem gleichen Getriebe (121) trainiert ist, und
• Senden (630) der Getriebezustandsbewertung an ein Steuergerät (110) des Elektrofahrrads (100) und/oder an ein mobiles Elektronikgerät (150), und
• Empfangen (611) mindestens eines Fahrdynamikgrößenverlaufes des Elektrofahrrads (100), wobei der Fahrdynamikgrößenverlauf ein zeitlicher Verlauf einer erfassten Beschleunigung des Elektrofahrrads (100) und/oder einer erfassten Geschwindigkeit des Elektrofahrrads (100) in Längsrichtung des Fahrzeugs (100) ist, und
• Ermittlung (620) der Getriebezustandsbewertung zusätzlich in Abhängigkeit des empfangenen Fahrdynamikgrößenverlaufes des Elektrofahrrads (100) und einer Vielzahl an Fahrdynamikgrößenverläufen einer Vielzahl an anderen Elektrofahrrädern (100) mit dem gleichen Getriebe (121).

7. Getriebeanalyseverfahren nach Anspruch 6, **dadurch gekennzeichnet, dass** die Ermittlung (620) der Getriebezustandsbewertung durch die rechnerbasierte Erkennung zusätzlich in Abhängigkeit des Alters des Getriebes (121) des Elektrofahrrads (100) erfolgt.

8. Getriebeanalyseverfahren nach einem der Ansprüche 6 bis 7, **dadurch gekennzeichnet, dass** das Verfahren die folgenden Schritte aufweist
• Empfangen (612) von Ortskoordinaten des Elektrofahrrads (100),
• Ermittlung (640) von Servicedaten in Abhängigkeit der empfangenen Ortskoordinaten und/oder des empfangenen Betriebsgrößenverlaufs und/oder und/oder des empfangenen Fahrdynamikgrößenverlaufes, und
• Senden (650) der ermittelten Servicedaten an das Steuergerät (110) des Elektrofahrrads (100) und/oder an das mobile Elektronikgerät (150).

9. Servereinrichtung (200), wobei die Servereinrichtung (200) dazu eingerichtet ist, ein Getriebeanalyseverfahren nach einem der Ansprüche 6 bis 8 durchzuführen, wobei die Servereinrichtung (200)
• die Getriebezustandsbewertung an ein Steuergerät (110) des Elektrofahrrads (100) und/oder an ein mobiles Elektronikgerät (150) sendet.

## Claims

1. Method for monitoring a transmission (121) of a drive unit (102) with a drive motor (120) of an electric bicycle (100), comprising the following method steps
• detecting (410) at least one operating variable of a shaft in the drive unit (102) at at least two points in time by means of at least one sensor (141, 142), wherein the detected operating variable is a rotation speed, a torque, a rotation angle of the shaft and/or a vibration variable of the drive unit (102), and
detecting (412) at least one driving dynamics variable of the electric bicycle (100) at at least two points in time, wherein the driving dynamics variable is an acceleration and/or a speed of the electric bicycle (100) in the longitudinal direction of the electric bicycle (100);
• transmitting (420) the detected operating variable profile to a server device (200), and transmitting (421) the at least one driving dynamics variable profile to the server device (200), and
• receiving (430) a transmission state assessment from the server device (200) depending on the transmitted operating variable profile and the transmitted driving dynamics variable profile, wherein the transmission state assessment represents the current state of the transmission (121) of the electric bicycle (100).

2. Method according to Claim 1, **characterized in that** the following steps are additionally carried out
• detecting (458) location coordinates of the electric bicycle (100),
• transmitting (459) the location coordinates to the server device (200), and
• receiving (460) service data from the server device (200) depending on the transmitted location coordinates and the transmitted operating variable profile and/or the transmitted driving dynamics variable profile.

3. Method according to either of the preceding claims, **characterized in that** the following steps are carried out
• receiving (431) control parameters from the server device (200) depending on the transmitted operating variable profile for controlling the drive motor (120), wherein the control parameters are configured to at least temporarily limit a generated torque and/or a generated rotation speed of the drive motor (120), and
• controlling (499) the drive motor (120) depending on the received control parameters.

4. Controller (110, 150), configured to carry out a method according to any of Claims 1 to 3.

5. Electric bicycle (100) having a controller (110) according to Claim 4 for monitoring a transmission (121) of a drive unit (102) with a drive motor (120) of the vehicle (100).

6. Transmission analysis method for a server device (200), comprising the following steps
• receiving (610) at least one operating variable profile of a shaft in a drive unit (102) with a transmission (121) and a drive motor (120) of an electric bicycle (100), wherein the operating variable is a rotation speed, a torque, a rotation angle of the shaft and/or a vibration variable of the drive unit (102),
• ascertaining (620) a transmission state assessment depending on the received operating variable profile and a plurality of operating variable profiles of a plurality of other electric bicycles (100) having the same transmission (121), wherein the transmission state assessment represents the current state of the transmission (121) of the electric bicycle (100), wherein the transmission state assessment is ascertained (620) by computer-based identification by means of a neural network, wherein the neural network on the server device (200) is trained with the plurality of operating variable profiles associated with transmission state assessments of a plurality of vehicles (100) having the same transmission (121), and
• transmitting (630) the transmission state assessment to a controller (110) of the electric bicycle (100) and/or to a mobile electronics device (150), and
• receiving (611) at least one driving dynamics variable profile of the electric bicycle (100), wherein the driving dynamics variable profile is a temporal profile of a detected acceleration of the electric bicycle (100) and/or a detected speed of the electric bicycle (100) in the longitudinal direction of the vehicle (100), and
• ascertaining (620) the transmission state assessment additionally depending on the received driving dynamics variable profile of the electric bicycle (100) and a plurality of driving dynamics variable profiles of a plurality of other electric bicycles (100) having the same transmission (121).

7. Transmission analysis method according to Claim 6, **characterized in that** the transmission state assessment is ascertained (620) by the computer-based identification additionally depending on the age of the transmission (121) of the electric bicycle (100).

8. Transmission analysis method according to either of Claims 6 and 7, **characterized in that** the method comprises the following steps
• receiving (612) location coordinates of the electric bicycle (100),
• ascertaining (640) service data depending on the received location coordinates and/or the received operating variable profile and/or the received driving dynamics variable profile, and
• transmitting (650) the ascertained service data to the controller (110) of the electric bicycle (100) and/or to the mobile electronics device (150).

9. Server device (200), wherein the server device (200) is configured to carry out a transmission analysis method according to any of Claims 6 to 8, wherein the server device (200)
• transmits the transmission state assessment to a controller (110) of the electric bicycle (100) and/or to a mobile electronics device (150).

## Revendications

1. Procédé permettant de surveiller une transmission (121) d'une unité d'entraînement (102) munie d'un moteur d'entraînement (120) d'un vélo électrique (100), présentant les étapes de procédé suivantes consistant à
• détecter (410) au moins une grandeur de fonctionnement d'un arbre dans l'unité d'entraînement (102) à au moins deux instants au moyen d'au moins un capteur (141, 142), la grandeur de fonctionnement détectée étant une vitesse de rotation, un couple, un angle de rotation de l'arbre et/ou une grandeur de vibration de l'unité d'entraînement (102), et
détecter (412) au moins une grandeur de dynamique de conduite du vélo électrique (100) à au moins deux instants, la grandeur de dynamique de conduite étant une accélération et/ou une vitesse du vélo électrique (100) dans la direction longitudinale du vélo électrique (100) ;
• envoyer (420) la courbe de grandeur de fonctionnement détectée à un dispositif serveur (200), et envoyer (421) ladite au moins une courbe de grandeur de dynamique de conduite au dispositif serveur (200), et
• recevoir (430) du dispositif serveur (200) une évaluation d'état de transmission en fonction de la courbe de grandeur de fonctionnement envoyée et de la courbe de grandeur de dynamique de conduite envoyée, l'évaluation d'état de transmission représentant l'état actuel de la transmission (121) du vélo électrique (100).

2. Procédé selon la revendication 1, **caractérisé en ce qu'**en plus les étapes suivantes sont exécutées, consistant à
• détecter (458) des coordonnées de lieu du vélo électrique (100),
• envoyer (459) les coordonnées de lieu au dispositif serveur (200), et
• recevoir (460) du dispositif serveur (200) des données de maintenance en fonction des coordonnées de lieu envoyées et de la courbe de grandeur de fonctionnement envoyée et/ou de la courbe de grandeur de dynamique de conduite envoyée.

3. Procédé selon l'une des revendications précédentes, **caractérisé en ce que** les étapes suivantes sont exécutées, consistant à
• recevoir (431) des paramètres de commande en fonction de la courbe de grandeur de fonctionnement envoyée pour piloter le moteur d'entraînement (120) du dispositif serveur (200), dans lequel les paramètres de commande sont conçus pour limiter au moins temporairement un couple généré et/ou une vitesse de rotation générée du moteur d'entraînement (120) , et
• piloter (499) le moteur d'entraînement (120) en fonction des paramètres de commande reçus.

4. Dispositif de commande (110, 150), conçu pour exécuter un procédé selon l'une quelconque des revendications 1 à 3.

5. Vélo électrique (100), comprenant un appareil de commande (110) selon la revendication 4, pour surveiller une transmission (121) d'une unité d'entraînement (102) par un moteur d'entraînement (120) du véhicule (100).

6. Procédé d'analyse de transmission pour un dispositif serveur (200) présentant les étapes suivantes consistant à
• recevoir (610) au moins une courbe de grandeur de fonctionnement d'un arbre dans une unité d'entraînement (102) munie d'une transmission (121) et d'un moteur d'entraînement (120) d'un vélo électrique (100), dans lequel la grandeur de fonctionnement est une vitesse de rotation, un couple, un angle de rotation de l'arbre et/ou une grandeur de vibration de l'unité d'entraînement (102),
• déterminer (620) une évaluation d'état de transmission en fonction de la courbe de grandeur de fonctionnement reçue et d'une pluralité de courbes de grandeur de fonctionnement d'une pluralité d'autres vélo électriques (100) munis de la même transmission (121), dans lequel l'évaluation d'état de transmission représente l'état actuel de la transmission (121) du vélo électrique (100), dans lequel une détermination (620) de l'évaluation d'état de transmission est effectuée par une reconnaissance informatique au moyen d'un réseau neuronal, dans lequel le réseau neuronal sur le dispositif serveur (200) est entraîné avec la pluralité de courbes de grandeur de fonctionnement associées à des évaluations d'état de transmission d'une pluralité de véhicules (100) munis de la même transmission (121), et
• envoyer (630) l'évaluation d'état de transmission à un appareil de commande (110) du vélo électrique (100) et/ou à un appareil électronique mobile (150), et
• recevoir (611) au moins une courbe de grandeur de dynamique de conduite du vélo électrique (100), dans lequel la courbe de grandeur de dynamique de conduite est une courbe dans le temps d'une accélération détectée du vélo électrique (100) et/ou d'une vitesse détectée du vélo électrique (100) dans la direction longitudinale du véhicule (100), et
• déterminer (620) l'évaluation d'état de transmission en plus en fonction de la courbe de grandeur de dynamique de conduite reçue du vélo électrique (100) et d'une pluralité de courbes de grandeur de dynamique de conduite d'une pluralité d'autres vélo électriques (100) munis de la même transmission (121).

7. Procédé d'analyse de transmission selon la revendication 6, **caractérisé en ce que** la détermination (620) de l'évaluation d'état de transmission est effectuée par la reconnaissance informatique en plus en fonction de l'âge de la transmission (121) du vélo électrique (100).

8. Procédé d'analyse de transmission selon l'une quelconque des revendications 6 à 7, **caractérisé en ce que** le procédé présente les étapes suivantes consistant à
• recevoir (612) des coordonnées de lieu du vélo électrique (100),
• déterminer (640) des données de maintenance en fonction des coordonnées de lieu reçues et/ou de la courbe de grandeur de fonctionnement reçue et/ou de la courbe de grandeur de dynamique de conduite reçue, et
• envoyer (650) les données de maintenance déterminées à l'appareil de commande (110) du vélo électrique (100) et/ou à l'appareil électronique mobile (150).

9. Dispositif serveur (200), le dispositif serveur (200) étant conçu pour effectuer un procédé d'analyse de transmission selon l'une quelconque des revendications 6 à 8, dans lequel le dispositif serveur (200)
• envoie l'évaluation d'état de transmission à un appareil de commande (110) du vélo électrique (100) et/ou à un appareil électronique mobile (150).
